# EUROPEAN PATENT APPLICATION

(11) **EP 0 832 677 A1**
(43) Date of publication of application: **01.04.1998**
(21) Application number: 97306786.1
(22) Date of filing: 02.09.1997
(51) Int. Cl.: B01D 45/16, B01D 50/00

(54) **Gas filter**

(30) Priority: 26.09.1996 GB 9620101
(71) Applicant: Andreae, Erhard Charles, 1110 Morges (CH)
(72) Inventor: Andreae, Erhard Charles, 1110 Morges (CH)
(74) Representative: JENSEN & SON

(57) **Abstract**

A gas filter has a perforated rigid platform element 1 on which is supported in a superimposed manner a plurality of flexible arc like filter elements 2, 3, 4 and 5. A chamber 7 is located between adjacent elements and at least some of the arc like elements 2, 3, 4, 8 are perforated in such a way that the gas stream passing through the filter is forced to change direction sharply when going from one chamber 7 to the next.

## Description

This invention relates to a gas filter, particularly but not exclusively, for filtering air in paint spray booths.

Regulations to keep the air clean are getting more and more difficult to satisfy. Known gas filters have either a short working duration, because they get blocked rapidly or, they are getting bulky.

The present invention provides a new way of making a long lasting and efficient gas filter, yet which is small in volume.

According to the present invention there is provided a gas filter including a perforated rigid board or platform element forming a support for a plurality of thin and flexible arc like filter elements fixed to the platform element in a superimposed manner to form between adjacent elements chambers through which, in operation, gas entering the filter through the platform element, passes sequentially through all the thin and flexible arc like filter elements. Embodiments of the invention will now be described by way of example with reference to the accompanying drawings in which:-
Figures 1a and 1b show a cross-section through a first embodiment of gas filter according to the invention;
Figures 2a and 2b show a second embodiment of a gas filter according to the invention;
Figure 3 shows a front, gas intake view of the rigid perforated platform illustrated in figures 1 and 2;
Figure 4 shows an elevation view of the outermost arc like element shown in figure 1, and
Figure 5 shows an elevation view of the outermost arc like element of the embodiment shown in figure 2.

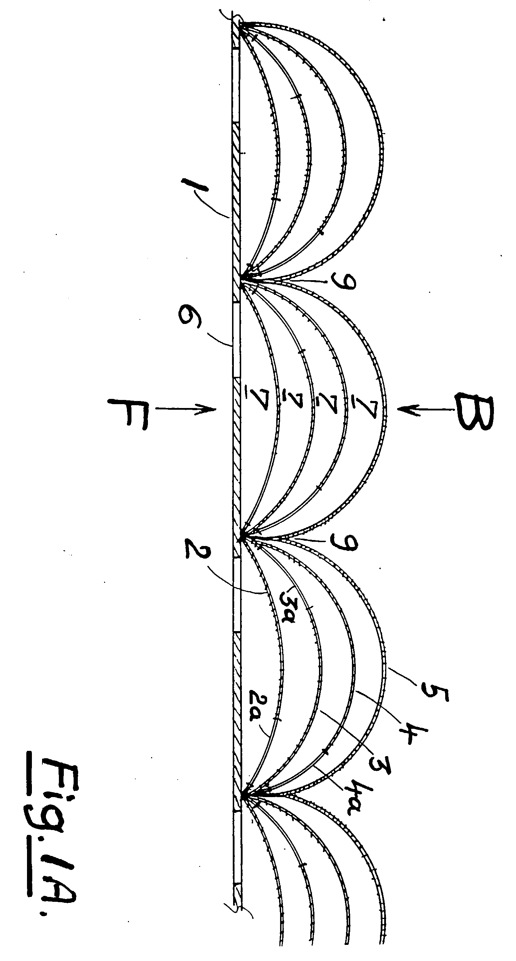

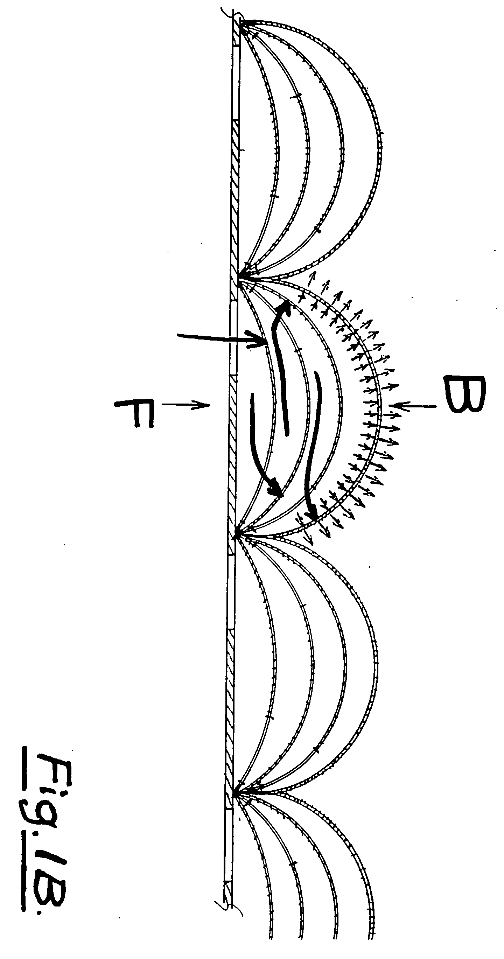

Referring now to figure 1 there is shown a cross-section of a gas filter having a perforated substantially rigid board or platform element 1 on which is mounted a plurality of thin and flexible arc like filter elements 2, 3, 4 and 5 which are all secured to the platform 1 at their ends at references 9. As shown in the drawings the arc like element 2 is wider than the portion of the platform 1 on which it is fixed, thereby forming a chamber 7 between the platform and the element 2. Similarly, the element 3 is wider than the element 2, element 4 is wider than the element 3, and so on forming as a result, chambers 7 between adjacent elements. The elements 2, 3 and 4 have, adjacent one end, perforations 2a, 3a and 4a. The perforations are located on alternate sides of the elements 2 to 4 so that the gas stream entering the filter through perforations 6 in the platform 1 are forced to change direction sharply when passing from one chamber into the next, as indicated by the arrows in figure 1b. In the embodiment illustrated in figures 1a and 1b, the outermost element 5 does not have perforations but is gas permeable so that the gas escapes through the pores of this arc like element 5, working as a micro filter, as illustrated in figure 1b.

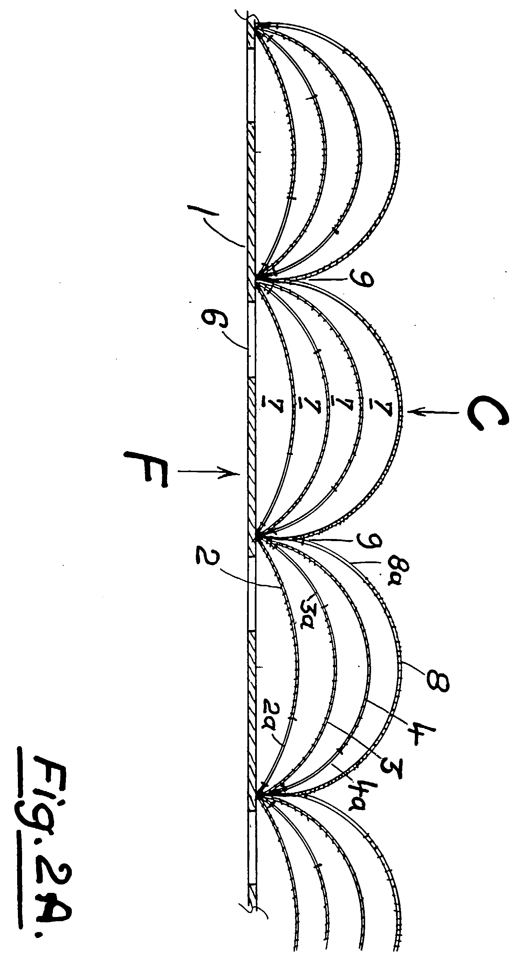

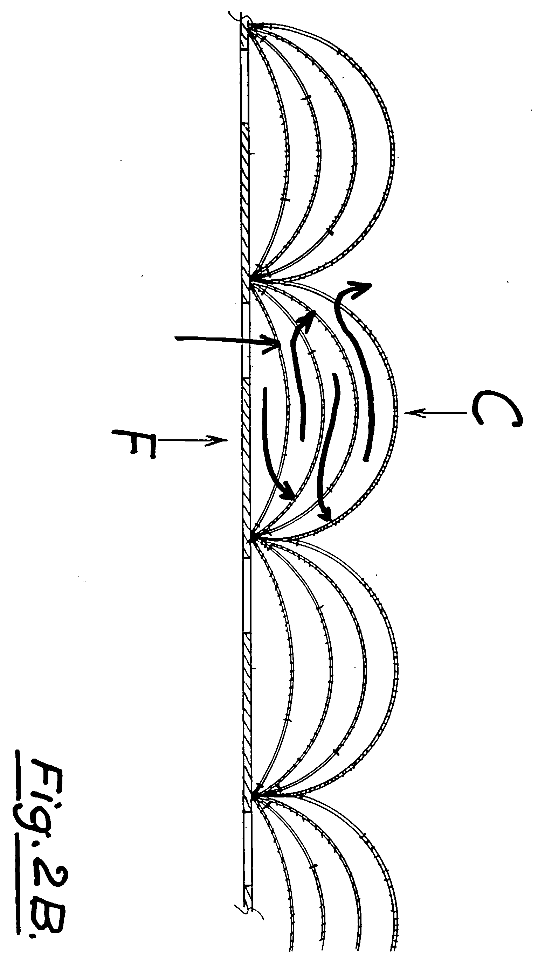

In the embodiment illustrated in figures 2a and 2b, where like references refer to like parts, the outermost arc like element 8 has perforations 8a adjacent one side, through which the gas exits from the filter. This design reduces the resistance of the filter.

All these superimposed filter elements are joined to the rigid platform 1 at reference points 9. Each plurality of elements forms a filter section and, as shown in the drawings, a plurality of such sections is located in a juxtaposed manner along the length of the platform 1. It will be understood that the number of arc like elements in each filter section may vary depending on the requirements of the particular installation and the number of sections of the arc like elements may also vary in dependence upon the requirements of the installation.

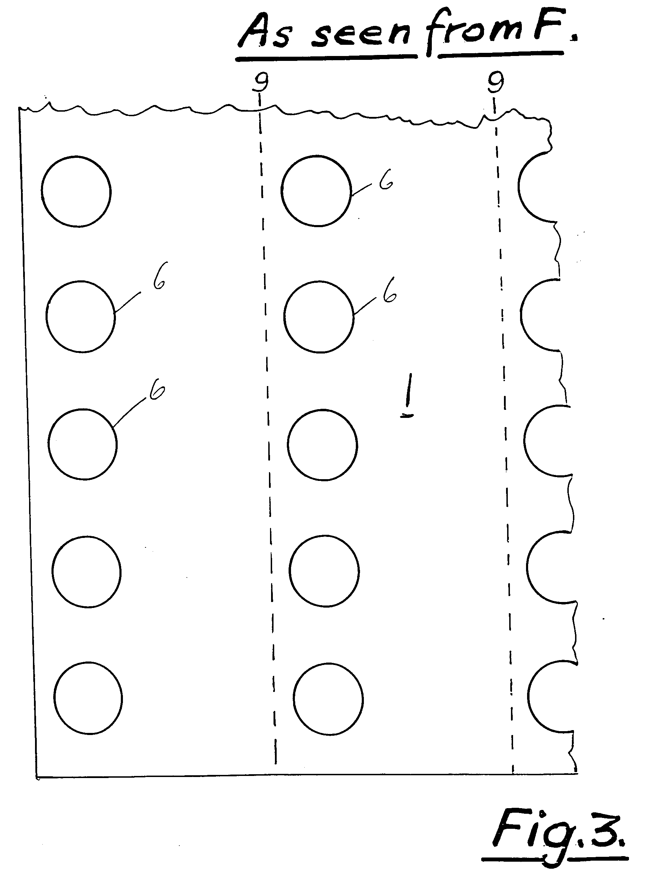

Figure 3 shows the gas input side of the rigid platform 1 from the direction indicated by the arrow F of figures 1 and 2 showing a plurality of perforations 6.

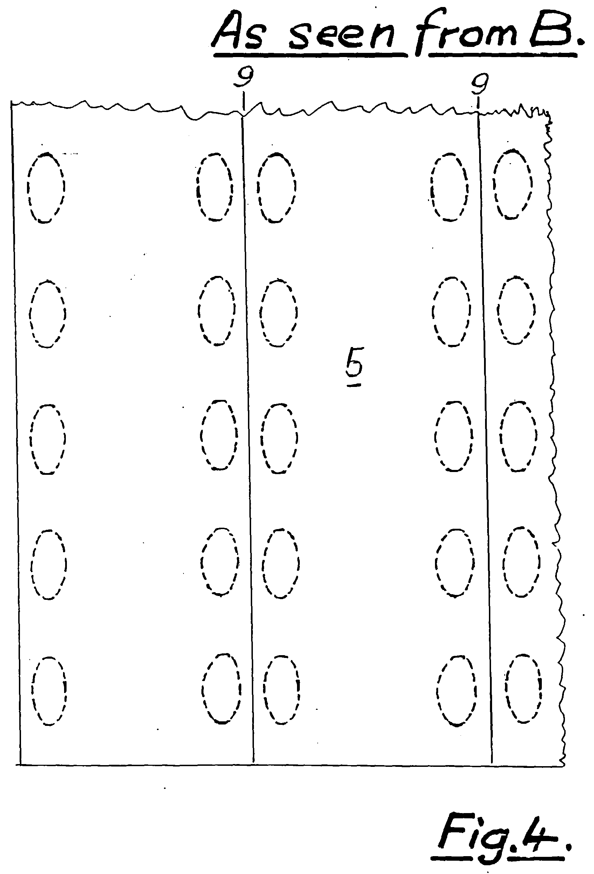

Figure 4 shows the elevation view of the arc like elements, as seen from B of figure 1 being the gas outlet side, in which the outer, non-perforated arc like element 5 is shown with the perforations in the layers 2, 3 and 4 shown in dotted outline.

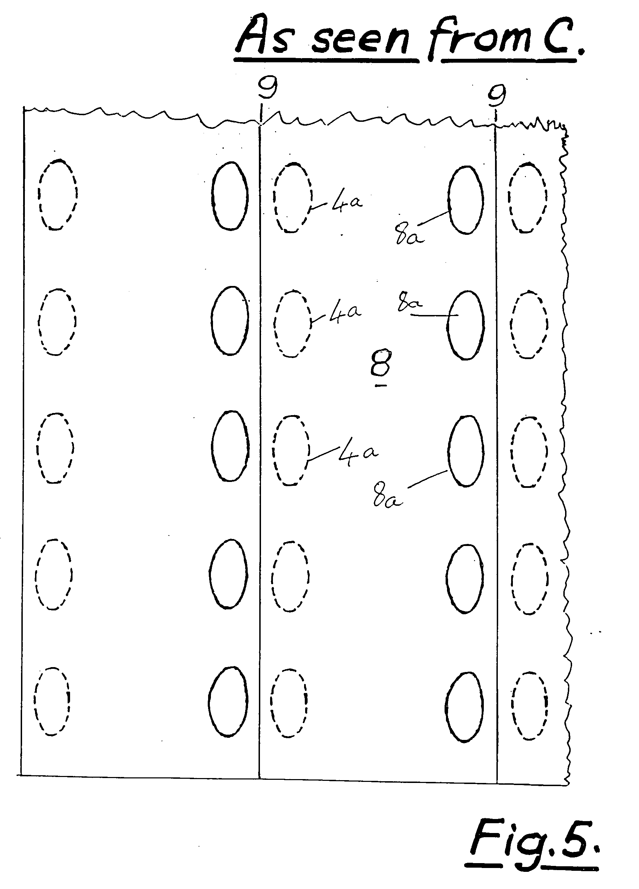

Figure 5 shows a similar elevation view in the direction of the arrow C in figure 2 showing the perforations 8a in the gas outlet outermost arc like element 8 and, in dotted outline, the perforations 4a in the inner arc like element 4. In all perforated arc like elements, the perforations are arranged in rows. When the filter is fixed into the frame of a ventilation apparatus, the thin and flexible arc like elements are flattened along the edges of the filter, so no gas can escape from the ends of the chambers 7, or by-pass the filter. For transport and storage, the thin and flexible elements are totally flattened against platform 1. Once fixed in the frame of a ventilation apparatus, the passing gas stream will blow up those elements, to give them the shape indicated in the drawings.

## Claims

1. A gas filter including a perforated rigid board or platform element 1 characterised in that the element forms a support for a plurality of thin and flexible arc like filter elements 2, 3, 4, 5 fixed to the platform element 1 in a superimposed manner to form between adjacent elements chambers 7 through which, in operation, gas entering the filter through the perforations 6 in the platform element passes sequentially through all thin and flexible arc like elements 2, 3, 4, 5.

2. A gas filter according to claim 1 characterised in that the first arc like filter element 2 adjacent the platform element 1 is wider than the portion of the platform element 1 on which it is secured, each additional arc like element 3, 4, 5 being wider than the one before so as to form the chambers 7 between adjacent elements.

3. A gas filter according to claim 1 or 2 characterised in that a plurality of the arc like elements 2, 3, 4 are perforated in such a way that a gas stream passing through the filter is forced to change direction sharply when going from one chamber to the next.

4. A gas filter according to claims 1, 2 or 3 characterised in that the last arc like element 8 remote from the platform element 1 is not perforated, consisting of a thin and flexible gas permeable material, acting as a final micro filter.

5. A gas filter according to any one of claims 1 to 4 characterised in that a plurality of said plurality of arc like elements 2, 3, 4 is spaced along said platform element 1 in a juxtaposed manner.
